# NEUE EUROPÄISCHE PATENTSCHRIFT

(11) **EP 3 092 919 B2**
(45) Veröffentlichungstag und Bekanntmachung des Hinweises auf die Entscheidung über den Einspruch: **19.01.2022**
(45) Hinweis auf die Patenterteilung: 19.12.2018
(21) Anmeldenummer: 16167026.0
(22) Anmeldetag: 26.04.2016
(51) Int. Cl.: A47B 88/493

(54) **FÜHRUNGSEINRICHTUNG ZUR FÜHRUNG EINES RELATIV ZU EINEM MÖBELKORPUS BEWEGBAREN MÖBELTEILS**
GUIDE DEVICE FOR GUIDING A MOVABLE PART OF A PIECE OF FURNITURE RELATIVE TO THE BODY OF A PIECE OF FURNITURE
DISPOSITIF DE GUIDAGE POUR LE GUIDAGE D'UNE PIECE DE MEUBLE MOBILE PAR RAPPORT À UN CORPS DE MEUBLE

(30) Priorität: 09.05.2015 DE 202015003469 U
(43) Veröffentlichungstag der Anmeldung: 16.11.2016
(73) Patentinhaber: Grass GmbH, 6973 Höchst (AT)
(72) Erfinder: LANGGUTH, Peter, 39307 Genthin (DE); GRABHER, Günter, 6972 Fußach (AT)
(74) Vertreter: Patentanwälte Magenbauer & Kollegen Partnerschaft mbB

(56) Entgegenhaltungen:
- CH-A5- 559 530
- DE-A1- 3 834 688
- DE-A1- 3 942 974
- DE-U1-202008 013 242

## Beschreibung

Die Erfindung betrifft eine Führungseinrichtung zur Führung eines relativ zu einem Möbelkorpus bewegbaren Möbelteils, insbesondere einer Schublade, eines Auszugs oder dergleichen, mit wenigstens einer Führungseinheit, die eine am Möbelkorpus befestigbare Korpusschiene, eine über untere Schienen-Führungsmittel relativ zur Korpusschiene verschieblich gelagerte Mittelschiene und eine über obere Schienen-Führungsmittel relativ zur Mittelschiene verschieblich gelagerte, mit einem Auszug verbindbare Auszugschiene aufweist, wobei zusätzlich zu den unteren Schienen-Führungsmitteln untere Schienen-Abstützmittel zur Abstützung der Mittelschiene an der Korpusschiene vorgesehen sind, und wobei zusätzlich zu den oberen Schienen-Führungsmitteln obere Schienen-Abstützmittel zur Abstützung der Auszugschiene an der Mittelschiene vorgesehen sind.

Derartige Führungseinrichtungen sind in den unterschiedlichsten Ausführungsformen bekannt. Eine Führungseinheit einer Führungseinrichtung, beziehungsweise eine Möbelausziehführung, die eine Korpusschiene, eine Mittelschiene und eine Auszugschiene aufweist, die über Schienen-Führungsmittel relativ verschieblich zueinander gelagert sind, wird auch als Vollauszug bezeichnet. Bei derartigen Vollauszügen wird zwischen einem Standard-Vollauszug, zum Beispiel DE 20 2008 013242 U1, und einem Überauszug, zum Beispiel DE 38 34 688 A1, unterschieden. Bei Überauszügen kann das mit der Führungseinrichtung bewegte Möbelteil noch weiter als beim Standard- Vollauszug herausgezogen werden, wobei sich die Auszugschiene in der Offenstellung mit ihrem hinteren Ende mit Abstand vor dem vorderen Ende der Korpusschiene befindet.

Unter Einwirkung der aus der anliegenden Traglast resultierenden Kraft senkt sich sowohl die Auszugschiene als auch die Mittelschiene bei Führungssystemen mit Überauszugslänge stärker nach vorne in Auszugsrichtung ab, als bei Führungssystemen ohne Überauszugslänge. Durch das Absenken kann die Mittelschiene eventuell ihre tragende Rolle gegenüber der Auszugschiene und der Korpusschiene verlieren, was zu Kollisionen der Auszugschiene mit der Korpusschiene beim Ein- beziehungsweise Ausfahren führen kann.

Das Absenken sowohl der Auszugschiene als auch der Mittelschiene beim Ausfahren unter Traglast tritt nicht nur bei Überauszügen auf, sondern auch bei Standard-Auszügen, jedoch ist das Problem bei Überauszügen stärker ausgeprägt.

Der Erfindung liegt daher die Aufgabe zugrunde, eine Führungseinrichtung bereit zu stellen, die gegenüber aus dem Stand der Technik bekannten herkömmlichen Führungseinrichtungen höhere Gewichts- und Belastungskräfte aufzunehmen vermag, wobei das Absenkverhalten der Führungseinrichtung vermindert ist.

Diese Aufgabe wird erfindungsgemäß mit einer Führungseinrichtung gemäß dem unabhängigen Anspruch 1 gelöst. Diese Aufgabe wird bei einer Führungseinrichtung der eingangs erwähnten Art erfindungsgemäß dadurch gelöst, dass die unteren Schienen-Abstützmittel und die oberen Schienen-Abstützmittel miteinander wirkverbunden sind. Weiterbildungen der Erfindung ergeben sich aus den Unteransprüchen.

Bei dieser erfindungsgemäßen Führungseinrichtung rollt die Mittelschiene über die unteren Schienen-Abstützmittel relativ zur Korpusschiene und rollt die Auszugschiene über die oberen Schienen-Abstützmittel relativ zur Mittelschiene ab. Um sicher zu stellen, dass die unteren und oberen Schienen-Abstützmittel definierte Bewegungen durchführen, das heißt dass sie bei unterschiedlichen Auszugspositionen der einzelnen Schienen ihrerseits definierte Positionen zueinander einnehmen, sind sie zwangsgesteuert miteinander verbunden. Diese Zwangssteuerung bewirkt, dass die unteren Schienen-Abstützmittel die oberen Schienen-Abstützmittel antreiben und umgekehrt.

Erfindungsgemäß weisen die unteren Schienen-Abstützmittel eine Zahnstange/Ritzel-Kombination aus wenigstens einer Zahnstange und wenigstens einem mit der Zahnstange beim Ein- oder Auszug in kämmenden Eingriff bringbaren oder in kämmendem Eingriff stehenden Ritzel auf. Eine Zahnstange/Ritzel-Kombination bietet den Vorteil, dass mit ihr sehr hohe Kräfte übertragen werden können und dass sie die Kräfte spielfrei übertragen können. Außerdem sind sowohl Zahnstangen als auch Ritzel relativ einfach und preiswert herstellbar und können werkzeugfrei gefügt werden.

Erfindungsgemäß ist bei der Zahnstange/Ritzel-Kombination der unteren Schienen-Abstützmittel das Ritzel an der Mittelschiene angeordnet und dort drehbar gelagert und ist die Zahnstange mit nach oben gerichteter Verzahnung an den unteren Schienen-Abstützmitteln angeordnet, angeformt oder vorgesehen. Ist die obere Längskante der unteren Schienen-Abstützmittel gezahnt ausgeführt d.h. mit einer Verzahnung versehen, bedarf es keiner zusätzlichen Zahnstange, die somit auch nicht am unteren Schienen-Abstützmittel befestigt werden muss und deren Gewicht eingespart werden kann.

Erfindungsgemäß weisen die oberen Schienen-Abstützmittel eine Zahnstange/Ritzel-Kombination aus wenigstens einer Zahnstange und wenigstens einem mit der Zahnstange beim Ein- oder Auszug in kämmenden Eingriff bringbaren oder in kämmendem Eingriff stehenden Ritzel auf. Eine Zahnstange/Ritzel-Kombination bietet auch hier den Vorteil, dass mit ihr sehr hohe Kräfte übertragen werden können und dass sie die Kräfte spielfrei übertragen kann.

Erfindungsgemäß ist bei der Zahnstange/Ritzel-Kombination der unteren Schienen-Abstützmittel auch hier das Ritzel an der Mittelschiene angeordnet und dort drehbar gelagert und ist die Zahnstange mit nach unten gerichteter Verzahnung an den oberen Schienen-Abstützmitteln angeordnet, angeformt oder vorgesehen. Ist die untere Längskante der oberen Schienen-Abstützmittel gezahnt ausgeführt, d.h. mit einer Verzahnung versehen, bedarf es auch hier keiner zusätzlichen Zahnstange, die somit auch nicht am unteren Schienen-Abstützmittel befestigt werden muss und deren Gewicht ebenfalls eingespart werden kann.

Erfindungsgemäß sind das Ritzel der Zahnstange/Ritzel-Kombination der unteren Schienen-Abstützmittel und das Ritzel der Zahnstange/Ritzel-Kombination der oberen Schienen-Abstützmittel miteinander wirkverbunden. Es erfolgt also eine direkte Kraft- und Wegübertragung vom einen zum anderen Ritzel. Außerdem kann dadurch eine Vollsynchronisation realisiert werden.

Bei einer bevorzugten Ausführungsform der Erfindung ist vorgesehen, dass die beiden Ritzel höhenversetzt zueinander angeordnet sind. Dadurch ist sichergestellt, dass das eine Ritzel sicher nur mit der einen Zahnstange kämmt und das andere Ritzel nur mit der anderen Zahnstange kämmt. Dabei werden die beiden Ritzel von den Zahnstangen angetrieben und kämmen indirekt miteinander.

Um die Kräfte von der einen Zahnstange auf die andere Zahnstange übertragen zu können, ist vorgesehen, dass zwischen den beiden Ritzeln eine ungerade Anzahl von mehreren Übertragungsritzeln zwischengeschaltet ist. Die mehrere Übertragungsritzel haben den Vorteil, dass sie preiswert herstellbar sind, dass sie aus Metall oder Kunststoff bestehen können, dass sie wartungsfrei sind und dass sie einfach auf einen Achsstummel montiert werden können oder dass sie einen Achsstummel aufweisen, der an der Mittelschiene drehbar gelagert wird. Vorteilhaft sind die beiden Ritzel gleichläufig angeordnet, bzw. werden von den mehreren Übertragungsritzeln gleichläufig angetrieben.

In besonders bevorzugter Weise stehen die mehreren Übertragungsritzel außer Eingriff zu den Zahnstangen. Die Übertragungsritzel dienen also lediglich zur Übertragung der Kräfte und Momente vom einen von der Zahnstange angetriebenen Ritzel auf das andere Ritzel, welches dann deren zugeordnete Zahnstange antreibt.

Bei einer besonders bevorzugen Ausführungsform der Erfindung sind die beiden Ritzel synchronisierend ausgebildet. Sowohl die Kräfte als auch die Momente der einen Zahnstange werden vollsynchron auf die andere Zahnstange übertragen.

Eine nicht zur Erfindung gehörende Ausführungsform sieht vor, dass die beiden Ritzel über eine Kette oder einen Zahnriemen miteinander verbunden sind, wobei die Ritzel als Keilriemenscheiben ausgeführt sind. Bevorzugt ist der Zahnriemen als außengezahnter Flachriemen ausgebildet und wird mittels einer Umlenkrolle auf das Ritzel gedrückt. Eine Spannrolle für den Riemen kann zudem vorteilhaft vorgesehen sein.

Um die Schienen unterschiedlich lang gestalten zu können ist bei einem bevorzugten Ausführungsbeispiel vorgesehen, dass die beiden Ritzel über ein Unter- oder Übersetzungsgetriebe miteinander verbunden sind. Auf diese Weise kann die Korpusschiene z.B. kürzer ausgestaltet werden, als die Auszugschiene. Vorteilhalft können auch die Ritzel selbst eine unterschiedliche Anzahl an Zähnen aufweisen.

Die Erfindung umfasst ferner ein Möbel, mit einem relativ zu einem Möbelkorpus bewegbaren, über eine Führungseinrichtung geführten Möbelteil, das sich durch eine Führungseinrichtung nach einem der Ansprüche auszeichnet.

Bevorzugte Ausführungsbeispiele sind in der Zeichnung dargestellt und werden im Folgenden näher erläutert. In der Zeichnung zeigen:
- Figur 1: eine Seitenansicht auf eine Führungseinheit eines bevorzugten Ausführungsbeispiels der erfindungsgemäßen Führungseinrichtung, wobei sich die Auszugschiene in der Ausfahrstellung befindet;
- Figur 2: eine vergrößerte Seitenansicht auf die Führungseinheit gemäß Figur 1, wobei sich die Auszugschiene in der Einfahrstellung befindet;
- Figur 3: den Ausschnitt III aus der Führungseinheit gemäß Figur 2;
- Figur 4: den Ausschnitt IV aus der Führungseinheit gemäß Figur 1;
- Figur 5: eine Seitenansicht auf eine Führungseinheit eines nicht zur Erfindung gehörenden Ausführungsbeispiels der Führungseinrichtung, wobei sich die Auszugschiene in der Ausfahrstellung befindet;
- Figur 6: eine vergrößerte Seitenansicht auf die Führungseinheit gemäß Figur 5, wobei sich die Auszugschiene in der Einfahrstellung befindet;
- Figur 7: den Ausschnitt VII aus der Führungseinheit gemäß Figur 6; und
- Figur 8: den Ausschnitt VIII aus der Führungseinheit gemäß Figur 5.

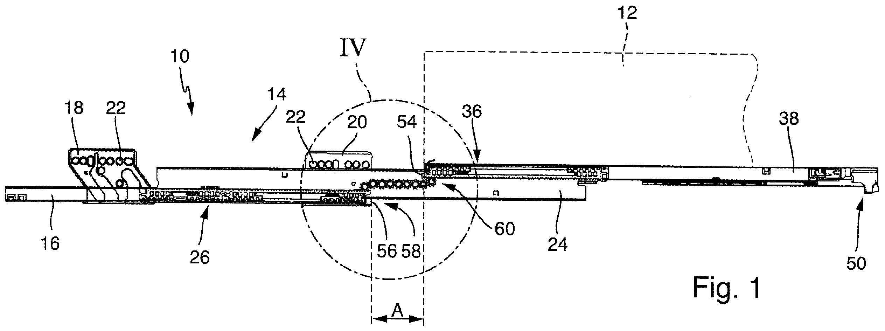

Die Figuren 1 bis 4 zeigen ein bevorzugtes Ausführungsbeispiel der erfindungsgemäßen Führungseinrichtung 10, die beispielhaft beim Einsatz an einem als Schublade ausgebildeten Möbelteil 12 gezeigt ist. Es ist selbstverständlich möglich, die Führungseinrichtung 10 auch an anderen Möbelteilen, beispielsweise Auszügen, wie Tablettauszügen, Schrankauszügen oder dergleichen, einzusetzen.

Im Folgenden wird die erfindungsgemäße Führungseinrichtung 10 jedoch am Beispielsfall einer Schublade erläutert. Die Schublade ist mittels der Führungseinrichtung 10 relativ zu einem nicht dargestellten Möbelkorpus verschieblich gelagert. Die Führungseinrichtung 10 umfasst wenigstens eine Führungseinheit 14, insbesondere zwei Führungseinheiten 14, die an entgegengesetzt liegenden Seitenflächen der Schublade angreifen. In der Zeichnung ist lediglich eine einzelne Führungseinheit 14 gezeigt, jedoch ist die dem entgegengesetzten Seitenfläche der Schublade zugeordnete andere Führungseinheit in entsprechender Weise aufgebaut.

Die Führungseinheiten 14 besitzen jeweils eine Korpusschiene 16, die beispielsweise als abgekantetes Blechbauteil ausgestaltet ist. Die Korpusschiene 16 weist zur Befestigung einen Korpuswinkel 18 auf, der wenigstens einen Montageschenkel 20 besitzt, der mehrere, beispielsweise in Reihen hintereinander angeordnete, Befestigungsöffnungen 22 aufweist, über die der Korpuswinkel 18 mit Hilfe geeigneter Befestigungsmittel an einer zugeordneten Seitenwand einer im Möbelkorpus ausgebildeten Schubladenaufnahme positionsfest befestigt werden kann. Der Korpuswinkel 18 besitzt einen winklig vom Montageschenkel 20 abstehenden Auflagenabschnitt, an dem eine ebenfalls zur Führungseinheit 14 gehörende Mittelschiene 24 in nachfolgend noch beschriebener Weise verschieblich geführt ist.

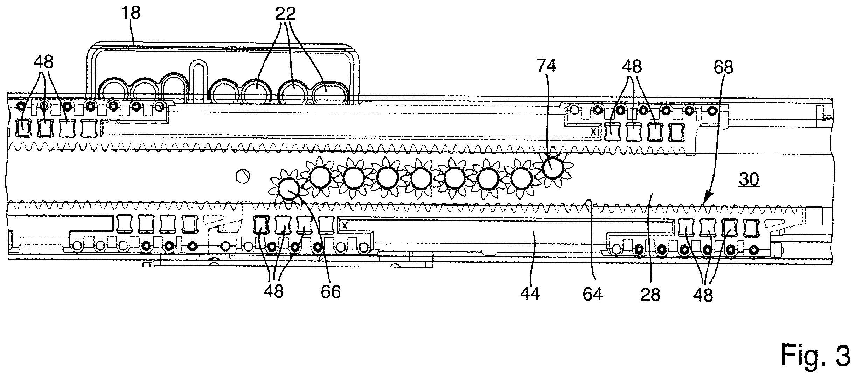

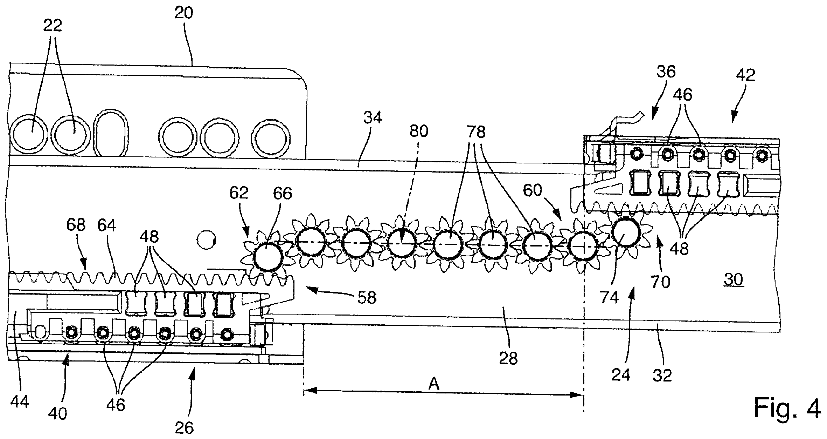

Wie insbesondere in Figur 3 und 4 dargestellt, ist die Mittelschiene 24 über untere Schienen-Führungsmittel 26 relativ zur Korpusschiene 16 verschieblich gelagert. Zweckmäßigerweise ist die Mittelschiene 24 ebenfalls als Blechprofil ausgestaltet, insbesondere mit einem U-förmigen Querschnitt. Die Mittelschiene 24 besitzt hierzu einen im montierten Zustand der Führungseinrichtung 10 vertikal ausgerichteten Basisabschnitt 28, der eine flächige Vorderseite 30 und eine dieser entgegengesetzte, dem Montageschenkel 20 des Korpuswinkels 18 zugewandte flächige Rückseite (vom Betrachter abgewandt) aufweist. An den Basisabschnitt 28 sind zwei im Wesentlichen parallel zueinander verlaufende Schenkelabschnitte 32, 34 angeformt, die jeweils im Bereich der Rückseite des Basisabschnitts 28 verlaufen.

Die Ober- und Unterseiten der Schenkelabschnitte 32, 34 bilden Laufflächen für die unteren Schienen-Führungsmittel 26 und auch für obere Schienen-Führungsmittel 36, wobei die Mittelschiene 24 über Letztere linear verschieblich an einer Auszugschiene 38 gelagert ist.

Wie insbesondere in der Figur 4 dargestellt, besitzen die unteren und oberen Schienen-Führungsmittel 26, 36 jeweils wenigstens einen Rollenwagen 40, 42. Im Beispielsfall sind den unteren Schienen-Führungsmitteln 26 ein unterer Rollenwagen 40 und den oberen Schienen-Führungsmitteln 36 ein oberer Rollenwagen 42 zugeordnet.

Der untere Rollenwagen 40 besitzt ein Wagengehäuse 44, das dem unteren Schenkelabschnitt 32 zugeordnet ist. Das Wagengehäuse 44 besteht zweckmäßigerweise aus Kunststoffmaterial. Das Wagengehäuse 44 erstreckt sich entlang des unteren Schenkelabschnitts 32. Im Wagengehäuse 44 sind mehrere Laufrollen 46 aufgenommen und dort über geeignete Lagermittel drehbar gelagert. Die Laufrollen 46 sind zweckmäßigerweise in mehreren Laufrollen-Gruppen zu jeweils mehreren Laufrollen 46 gruppiert. Die Drehachsen der Laufrollen 46 erstrecken sich in der Ebene des zugeordneten unteren Schenkelabschnitts 32.

Jede Laufrollen-Gruppe besitzt eine Mehrzahl an oberen und eine Mehrzahl an unteren Laufrollen 46. Die oberen Laufrollen 46 einer Laufrollen-Gruppe sind in Längsrichtung hintereinander angeordnet, wobei ihre Drehachsen parallel zueinander ausgerichtet sind. Die oberen Laufrollen 46 einer Laufrollen-Gruppe laufen mit ihren Laufflächen auf der Oberseite des zugeordneten unteren Schenkelabschnitts 32 ab. Die unteren Laufrollen 46 einer Laufrollen-Gruppe sind den oberen Laufrollen 46 der gleichen Laufrollen-Gruppe gegenüberliegend, und zwar liegen sich stets paarweise eine obere Laufrolle 46 einer unteren Laufrolle 46 gegenüber, wobei zwischen den oberen und unteren Laufrollen der zugeordnete untere Schenkelabschnitt 32 aufgenommen ist. Die unteren Laufrollen 46 einer Laufrollen-Gruppe laufen mit ihren Laufflächen auf der Unterseite des zugeordneten unteren Schenkelabschnitts 32 der Mittelschiene 24 ab.

Wie insbesondere in der Figur 4 gezeigt, sind am unteren Rollenwagen 40 mehrere in Schienen-Längsrichtung hintereinander angeordnete Laufrollen-Gruppen ausgebildet, die jeweils obere und untere Laufrollen 46 aufweisen. Die Anordnung der oberen und unteren Laufrollen 46 der anderen Laufrollen-Gruppen ist in derselben Weise wie bei der vorbeschriebenen Laufrollen-Gruppe.

Die Figur 3 zeigt insbesondere den oberen Rollenwagen 42, über den die Auszugschiene 38 linear verschieblich zur Mittelschiene 24 gelagert ist. Der obere Rollenwagen 42 ist dem oberen Schenkelabschnitt 34 der Mittelschiene 24 zugeordnet. Es sind ebenfalls mehrere Laufrollen-Gruppen zu jeweils mehreren oberen und unteren Laufrollen 46 ausgebildet. Die oberen Laufrollen 46 des oberen Rollenwagens 42 laufen an der Oberseite des oberen Schenkelabschnitts 34 ab. Die unteren Laufrollen 46 des oberen Rollenwagens 42 hingegen laufen an der Unterseite des oberen Schenkelabschnitts 34 ab. Der obere Schenkelabschnitt 34 ist also wiederum zwischen den oberen und unteren Laufrollen 46 der Laufrollen-Gruppe aufgenommen.

Die unteren und oberen Rollenwagen 40, 42 sind unabhängig voneinander bewegbar.

Die unteren Laufrollen 46 einer jeweiligen Laufrollen-Gruppe des unteren Rollenwagens 40 laufen wie bereits erwähnt an der Unterseite des unteren Schenkelabschnitts 32 ab. Ferner laufen diese unteren Laufrollen 46 auf einer zugeordneten Lauffläche der Korpusschiene 16 ab. Der untere Rollenwagen 40 ist sowohl gegenüber der Korpusschiene 16 als auch gegenüber der Mittelschiene 24 relativ verschieblich gelagert.

Die oberen Laufrollen 46 einer jeweiligen Laufrollen-Gruppe des oberen Rollenwagens 42 laufen wie bereits erwähnt an der Oberseite des oberen Schenkelabschnitts 34 ab. Gleichzeitig laufen sie an einer zugeordneten Lauffläche der Auszugschiene 38 ab.

Wie insbesondere in den Figuren 3 und 4 dargestellt, besitzen sowohl der untere als auch der obere Rollenwagen 40, 42 in den jeweiligen Wagengehäusen 44 drehbar gelagert Stützrollen 48, deren Drehachsen senkrecht zu den Drehachsen der Laufrollen 46 ausgerichtet sind, also in der Ebene des Basisabschnitts 28 der Mittelschiene 24 liegen. Die Stützrollen 48 am oberen Rollenwagen 42 laufen an einer zugeordneten Lauffläche an der Auszugschiene 38 ab und sorgen für eine Seitenstabilisierung des oberen Rollenwagens 42. Die Stützrollen 48 am unteren Rollenwagen 40 sind einer entsprechenden Lauffläche an der Korpusschiene 16 zugeordnet und laufen dort ab und sorgen damit für eine Seitenstabilisierung des unteren Rollenwagens 40.

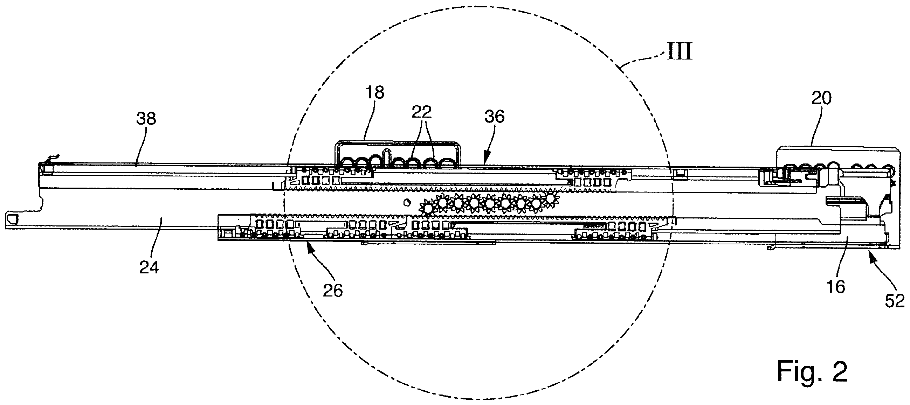

Wie insbesondere in Figur 1 dargestellt, ist die Auszugschiene 38 über die oberen Schienen-Führungsmittel 36 linear verschieblich zur Mittelschiene 24 geführt. Die Auszugschiene 38 lässt sich zwischen einer in Figur 1 gezeigten Ausfahrstellung 50 und einer in Figur 2 gezeigten Einfahrstellung 52 bewegen.

Die Auszugschiene 38, die im Beispielsfall auch als Schubladenschiene bezeichnet werden könnte, ist über Kupplungsmittel, insbesondere über Rastmittel, mit der Schublade gekoppelt.

In den beschriebenen Ausführungsbeispielen ist die Führungseinheit 14 erfindungsgemäß als Überauszug ausgebildet. Dabei ist, wie insbesondere in Figur 1 dargestellt, in der Ausfahrstellung 50 ein in Ausfahrrichtung der Auszugschiene 38 hinteres Ende 54 der Auszugschiene 38 mit Abstand A vor einem vorderen Ende 56 der Korpusschiene 16 positioniert.

Um vor allem bei solchen Überauszügen ein für das Führungsverhalten der Führungseinheit 14 schädliches Absenken der Auszugschiene 38 und der Mittelschiene 24, insbesondere bei schwerer Beladung der Schublade, zu verhindern, sind Schienen-Abstützmittel 58, 60 vorgesehen.

Es sind untere Schienen-Abstützmittel 58 zur Abstützung der Mittelschiene 24 an der Korpusschiene 16 vorgesehen. Zusätzlich zu den unteren Schienen-Abstützmitteln 58 sind auch obere Schienen-Abstützmittel 60 zur Abstützung der Auszugschiene 38 an der Mittelschiene 24 vorgesehen.

Dabei wirken die unteren Schienen-Abstützmittel 58 mit den unteren Schienen-Führungsmitteln 26 und die oberen Schienen-Abstützmittel 60 mit den oberen Schienen-Führungsmitteln 36 zusammen.

Wie insbesondere in Figur 4 dargestellt, weisen die unteren Schienen-Abstützmittel 58 eine Zahnstange/Ritzel-Kombination 62 auf, die im Beispielsfall eine Zahnstange 64 und wenigstens ein mit der Zahnstange 64 beim Ein- oder Auszug in kämmenden Eingriff bringbares oder in kämmendem Eingriff stehendes Ritzel 66 aufweisen.

Gemäß dem in den Figuren 1 bis 4 gezeigten bevorzugten Ausführungsbeispiel der erfindungsgemäßen Führungseinrichtung 10 befindet sich das Ritzel 66 an der Vorderseite 30 des Basisabschnitts 28 der Mittelschiene 24 und ist dort über geeignete Lagermittel drehbar gelagert. Wie insbesondere in Figur 3 dargestellt, ist die dem Ritzel 66 zugeordnete Zahnstange 64 mit nach oben gerichteter Verzahnung 68 an den unteren Schienen-Führungsmitteln 26 angeordnet. Zweckmäßigerweise befindet sich die Zahnstange 64 am Wagengehäuse 44 des unteren Rollenwagens 40. Die Zahnstange 64 kann beispielsweise als separates Bauteil mit dem Wagengehäuse 44 verbunden sein oder, wie im Beispielsfall gezeigt, bei der Herstellung des insbesondere aus Kunststoffmaterial bestehenden Wagengehäuses 44 gleich mit angeformt werden.

Die oberen Schienen-Abstützmittel 60 weisen ebenfalls eine Zahnstange/Ritzel-Kombination 70 auf. Auch hier sind eine Zahnstange 72 und ein zugeordnetes Ritzel 74 vorgesehen. Entsprechend zur Zahnstange/Ritzel-Kombination 62 der unteren Schienen-Abstützmittel 58 ist das Ritzel 74 bei den oberen Schienen-Abstützmitteln 60 ebenfalls an der Vorderseite 30 des Basisabschnitts 28 der Mittelschiene 24 angeordnet und ist dort über geeignete Lagermittel drehbar gelagert. Die zugeordnete Zahnstange 72 ist an den oberen Schienen-Führungsmitteln 36 angeordnet, und zwar am Wagengehäuse 44 des oberen Rollenwagens 42, wie insbesondere in Figur 3 gezeigt. Die Zahnstange 72 besitzt eine nach unten weisende Verzahnung 76. Das Ritzel 74 ist über geeignete Lagermittel drehbar am Basisabschnitt 28 der Mittelschiene 24 gelagert und greift in die nach unten gerichtete Verzahnung 76 der am Wagengehäuse 28 ausgebildeten zugeordneten Zahnstange 72 ein.

In den Figuren 3 und 4 ist erkennbar, dass die beiden Ritzel 66 und 74 zueinander höhenversetzt angeordnet sind und dass zusätzlich zu den beiden an der Mittelschiene 24 drehbar befestigten Ritzeln 66 und 74 noch mehrere, im dargestellten Ausführungsbeispiel sieben, also eine ungerade Anzahl von Übertragungsritzeln 78 angeordnet sind, die ebenfalls an der Mittelschiene 24 drehbar befestigt sind. Die Übertragungsritzel 78 liegen in einer Linie 80, die einen gleichen Abstand zum Ritzel 66 wie zum Ritzel 74 besitzt. Somit berühren die Übertragungsritzel 78 weder die Zahnstange 64 noch die Zahnstange 72. Außerdem liegen die Übertragungsritzel 78 zwischen den beiden Ritzeln 66 und 74 und kämmen mit diesen. Dadurch werden die beiden Ritzel 66 und 74 gegenläufig angetrieben.

Ausgehend von der in Figur 2 gezeigten Einfahrstellung 52 der Auszugschiene 38 wird die Auszugschiene 38 beim Ausziehen beziehungsweise Ausfahren der Schublade in Richtung der Ausfahrstellung 50 bewegt. Neben dem Abrollen der diversen Laufrollen 46 auf ihren zugeordneten Laufflächen fährt die am oberen Rollenwagen 42 vorgesehene Zahnstange 72 auf dem zugeordneten Ritzel 74 ab. Gleichzeitig kämmt das ebenfalls an der Mittelschiene 24 angeordnete Ritzel 66 mit der zugeordneten, am unteren Rollenwagen 40 angeordneten und die nach oben gerichtete Verzahnung 68 aufweisende Zahnstange 64. Die Zahnstangen 64 und 72 führen also gegenläufige Bewegungen aus. Ab einem bestimmten Ausfahrweg verlässt die Auszugschiene 38 den Bereich der Korpusschiene 16, so dass es zu einem Überauszug kommt. In der in Figur 1 gezeigten Ausfahrstellung 50 bleibt jedoch das an der Mittelschiene 24 angeordnete Ritzel 66 in Eingriff mit der zugeordneten Zahnstange 64 am unteren Rollenwagen 40, wodurch sich die Mittelschiene 24 über den unteren Rollenwagen 40 an der Korpusschiene 16 abstützen kann. Gleichzeitig stützt sich die Auszugschiene 38 über die Zahnstange 76 und das zugeordnete Ritzel 74 an der Mittelschiene 24 ab. Da die Mittelschiene 24, wie zuvor erwähnt, an der Korpusschiene 16 abgestützt ist, ist dementsprechend auch die Auszugschiene 38 über die Mittelschiene 24 an der Korpusschiene 16 abgestützt. Somit lässt sich das Absenkverhalten beim Ausfahren der Auszugschiene 38 und der Mittelschiene 24 vermindern. Weil die Führungseinrichtung 10 zwei identisch aufgebaute Führungseinheiten 14 aufweist und die Ritzel 66 und 74 über Übertragungsritzel 78 miteinander kämmen, so lässt sich durch die identisch aufgebauten Zahnstange/Ritzel-Kombinationen 62, 70 an beiden Führungseinheiten 14 eine Vollsynchronisation bei der Führung erzielen.

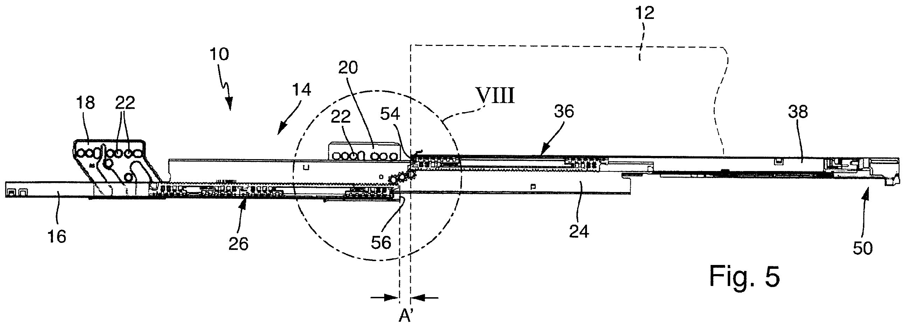

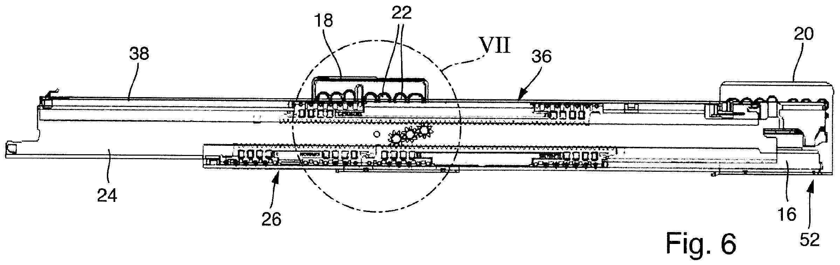

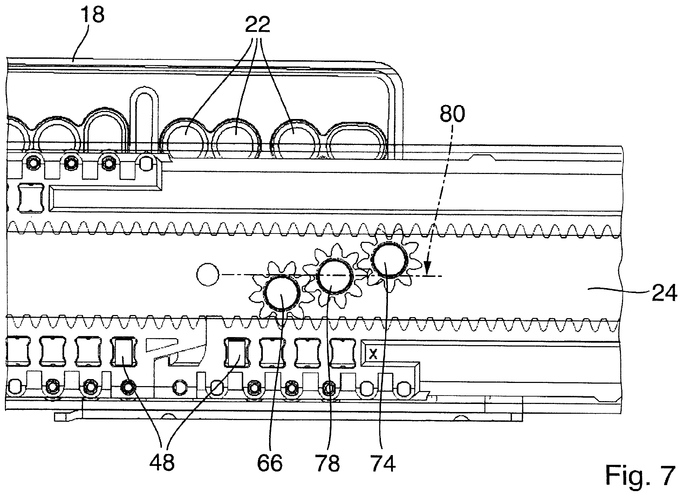

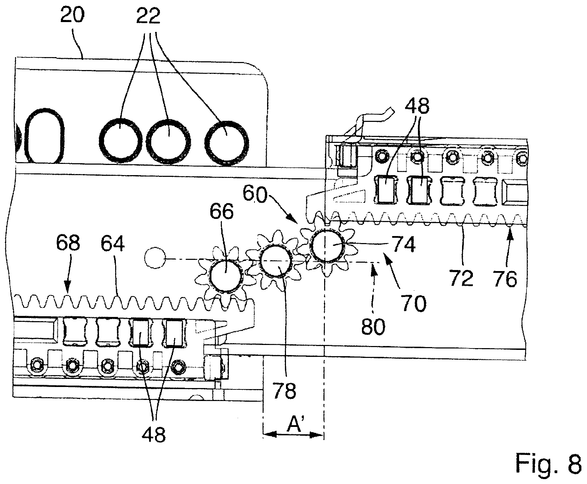

Die Figuren 5 bis 8 zeigen ein nicht zur Erfindung gehörendes Ausführungsbeispiel, bei welcher gleiche Bauteile gleich benannt sind und gleiche Bezugszeichen aufweisen. Bei diesem zweiten Ausführungsbeispiel weist die Führungseinrichtung 10 eine Korpusschiene 16, eine Mittelschiene 24 und eine Auszugschiene 38 auf, mit welcher ebenfalls ein Möbelteil 12 aus einem Korpus ausgefahren werden kann, wobei die Führungseinheit 14 ebenfalls als Überauszug ausgebildet ist. Dabei ist, wie in Figur 5 dargestellt, in der Ausfahrstellung 50 ein in Ausfahrrichtung der Auszugschiene 38 hinteres Ende 54 der Auszugschiene 38 mit Abstand A' vor einem vorderen Ende 56 der Korpusschiene 16 positioniert. Dieser Abstand A' ist geringer, als der Abstand A des in den Figuren 1 bis 4 gezeigten Ausführungsbeispiels. Dieser kleinere Abstand A' wird dadurch bewirkt, dass zwischen den Ritzeln 66 und 74 nur ein einziges Übertragungsritzel 78 vorgesehen ist, wobei dieses eine Übertragungsritzel 78 ebenfalls an der Mittelschiene 24 in der Linie 80 zwischen den beiden Ritzeln 66 und 74 angeordnet ist und mit diesen kämmt. Durch Einstellung der Anzahl der Übertragungsritzel 78, wobei stets eine ungerade Anzahl verwendet wird, kann der Abstand A und somit die Größe des Überauszugs bestimmt werden.

Es kann somit ein definierter Überauszug bei vollsynchronisierten Führungseinheiten 14 verwirklicht werden, wobei auch schwere Möbelteile 12 derart unterstützt und hohe Gewichts- und Belastungskräfte aufgenommen werden, dass die Auszugschiene 38 sich nicht absenkt.

## Patentansprüche

1. Führungseinrichtung (10) zur Führung eines relativ zu einem Möbelkorpus bewegbaren Möbelteils (12), insbesondere einer Schublade, eines Auszugs oder dergleichen, mit wenigstens einer Führungseinheit (14), die eine am Möbelkorpus befestigbare Korpusschiene (16), eine über untere Schienen-Führungsmittel (26) relativ zur Korpusschiene (16) verschieblich gelagerte Mittelschiene (24) und eine über obere Schienen-Führungsmittel (36) relativ zur Mittelschiene (24) verschieblich gelagerte, mit einem Auszug verbindbare Auszugschiene (38) aufweist, wobei zusätzlich zu den unteren Schienen-Führungsmitteln (26) untere Schienen-Abstützmittel (58) zur Abstützung der Mittelschiene (24) an der Korpusschiene (16) vorgesehen sind, und wobei zusätzlich zu den oberen Schienen-Führungsmitteln (36) obere Schienen-Abstützmittel (60) zur Abstützung der Auszugschiene (38) an der Mittelschiene (24) vorgesehen sind, wobei die unteren Schienen-Abstützmittel (58) und die oberen Schienen-Abstützmittel (60) miteinander wirkverbunden sind, und wobei die Führungseinheit (14) als Überauszug ausgebildet ist, wobei in einer Ausfahrstellung (50) ein in Ausfahrrichtung der Auszugschiene (38) hinteres Ende (54) der Auszugschiene (38) mit Abstand A vor einem vorderen Ende (56) der Korpusschiene (16) positioniert ist, wobei die unteren und oberen Schienen-Abstützmittel (58,60) jeweils eine Zahnstange/Ritzel-Kombination (62, 70) aus wenigstens einer Zahnstange (64, 72) und wenigstens einem mit der Zahnstange (64, 72) beim Ein- oder Auszug in kämmenden Eingriff bringbaren oder in kämmendem Eingriff stehenden an der Mittelschiene (24) angeordneten und dort drehbar gelagerten Ritzel (66, 74) aufweisen, wobei die beiden Ritzel (66,74) miteinander wirkverbunden sind, **dadurch gekennzeichnet, dass** die Zahnstange (64) der unteren Schienen-Abstützmittel (58) mit nach oben gerichteter Verzahnung an den unteren Schienen-Führungsmitteln (26) und die Zahnstange (72) der oberen Schienen-Abstützmittel (60) mit nach unten gerichteter Verzahnung (76) an den oberen-Schienen-Führungsmitteln angeordnet sind, und wobei zwischen den beiden Ritzeln (66,74) eine ungerade Anzahl von mehreren Übertragungsritzeln (78) zwischengeschaltet ist.

2. Führungseinrichtung nach Anspruch 1, **dadurch gekennzeichnet, dass** die beiden Ritzel (66, 74) zueinander höhenversetzt angeordnet sind.

3. Führungseinrichtung nach Anspruch 1 oder 2, **dadurch gekennzeichnet, dass** die beiden Ritzel (66, 74) angetrieben sind und indirekt miteinander kämmen, wobei vorzugsweise die beiden Ritzel (66, 74) von Zahnstangen (64, 72) angetrieben sind.

4. Führungseinrichtung nach Anspruch 3, **dadurch gekennzeichnet, dass** nebeneinander liegende und miteinander kämmende Übertragungsritzel (78) gegenläufig angeordnet sind.

5. Führungseinrichtung nach Anspruch 4, **dadurch gekennzeichnet, dass** die mehreren Übertragungsritzel (78) außer Eingriff zu den Zahnstangen (64, 72) stehen.

6. Führungseinrichtung nach einem der vorhergehenden Ansprüche, **dadurch gekennzeichnet, dass** die beiden Ritzel (66, 74) gleichläufig angeordnet sind.

7. Führungseinrichtung nach einem der vorhergehenden Ansprüche, **dadurch gekennzeichnet, dass** die beiden Ritzel (66, 74) synchronisierend ausgebildet sind.

8. Führungseinrichtung nach einem der vorhergehenden Ansprüche, **dadurch gekennzeichnet, dass** die beiden Ritzel (66, 74) über ein Unter- oder Übersetzungsgetriebe miteinander verbunden sind.

9. Möbel, mit einem relativ zu einem Möbelkorpus bewegbaren, über eine Führungseinrichtung (10) geführtes Möbelteil (12), **dadurch gekennzeichnet, dass** die Führungseinrichtung (10) nach einem vorhergehenden Ansprüche ausgebildet ist.

## Claims

1. Guide device (10) for guiding a furniture component (12) which is movable relative to a furniture carcass, in particular a drawer, a pull-out or the like, with at least one guide unit (14) which has a carcass rail (16) attachable to the furniture carcass, a centre rail (24) movably mounted relative to the carcass rail (16) via bottom rail guidance means (26), and a pull-out rail (38) connectable to a pull-out and movably mounted relative to the centre rail (24) via top rail guidance means (36) wherein, in addition to the bottom rail guidance means (26), bottom rail support means (58) are provided to support the centre rail (24) on the carcass rail (16) and wherein, in addition to the top rail guidance means (36), top rail support means (60) are provided to support the pull-out rail (38) on the centre rail (24), wherein the bottom rail support means (58) and the top rail support means (60) are operatively connected to one another, and wherein the guide unit (14) is in the form of an over-extension runner wherein, in a pulled-out position (50), a rear end (54) of the pull-out rail (38) in the pull-out direction of the pull-out rail (38) is positioned with clearance A in front of a front end (56) of the carcass rail (16), wherein the bottom and top rail support means (58, 60) each have a rack/pinion combination (62, 70) of at least one rack (64, 72) and at least one pinion (66, 74) which may be brought into or is in meshing engagement with the rack (64, 72) during pushing-in or pulling-out and is fitted to and rotatably mounted on the centre rail (24), wherein the two pinions (66, 74) are operatively connected to one another, **characterised in that** the rack (64) of the bottom rail support means (58) is arranged with upwards directed teeth on the bottom rail guidance means (26) and the rack (72) of the top rail support means (60) is arranged with downwards directed teeth (76) on the top rail guidance means, and wherein an odd number of several transmission pinions (78) is interposed between the two pinions (66, 74).

2. Guide device according to claim 1, **characterised in that** the two pinions (66, 74) are mounted vertically offset to one another.

3. Guide device according to claim 1 or 2, **characterised in that** the two pinions (66, 74) are driven and mesh with one another indirectly, wherein preferably the two pinions (66, 74) are driven by racks (64, 72).

4. Guide device according to claim 3, **characterised in that** transmission pinions (78) lying adjacent to and meshing with one another work in opposite directions.

5. Guide device according to claim 4, **characterised in that** the several transmission pinions (78) are disengaged from the racks (64, 72).

6. Guide device according to any of the preceding claims, **characterised in that** the two pinions (66, 74) work in the same direction.

7. Guide device according to any of the preceding claims, **characterised in that** the two pinions (66, 74) are synchronised.

8. Guide device according to any of the preceding claims, **characterised in that** the two pinions (66, 74) are connected to one another via a reduction gear or a step-up gear.

9. Piece of furniture with a furniture component (12) which is movable relative to a furniture carcass via a guide device (10), **characterised in that** the guide device (10) is designed according to any of the preceding claims.

## Revendications

1. Dispositif de guidage (10) pour le guidage d'une pièce de meuble (12) mobile par rapport à un corps de meuble, en particulier d'un tiroir, d'une rallonge ou similaires, avec au moins une unité de guidage (14) qui présente un rail de corps (16) pouvant être fixé sur le corps de meuble, un rail médian (24) logé de manière mobile par le biais de moyens de guidage de rail (26) inférieurs par rapport au rail de corps (16) et un rail de rallonge (38) pouvant être relié à une rallonge, logé de manière mobile par le biais de moyens de guidage de rail (36) supérieurs par rapport au rail médian (24), dans lequel outre les moyens de guidage de rail (26) inférieurs des moyens d'appui de rail (58) inférieurs sont prévus pour l'appui du rail médian (24) sur le rail de corps (16), et dans lequel outre les moyens de guidage de rail (36) supérieurs des moyens d'appui de rail (60) supérieurs sont prévus pour l'appui du rail de rallonge (38) sur le rail médian (24), dans lequel les moyens d'appui de rail (58) inférieurs et les moyens d'appui de rail (60) supérieurs sont reliés activement entre eux, et dans lequel l'unité de guidage (14) est réalisée en tant que surrallonge, dans lequel dans une position de sortie (50) une extrémité (54) arrière dans le sens de sortie du rail de rallonge (38) du rail de rallonge (38) est positionnée à distance A avant une extrémité avant (56) du rail de corps (16), dans lequel les moyens d'appui de rail inférieurs et supérieurs (58, 60) présentent respectivement une combinaison de crémaillère/pignon (62, 70) d'au moins une crémaillère (64, 72) et d'au moins un pignon (66, 74) pouvant être amené en prise engrenante ou se trouvant en prise engrenante avec la crémaillère (64, 72) lors de l'entrée ou la sortie agencé sur le rail médian (24) et logé de manière rotative là-bas, dans lequel les deux pignons (66, 74) sont reliés activement l'un à l'autre, **caractérisé en ce que** la crémaillère (64) des moyens d'appui de rail (58) inférieurs est agencée avec une denture dirigée vers le haut sur les moyens de guidage de rail (26) inférieurs et la crémaillère (72) des moyens d'appui de rail (60) supérieurs est agencée avec la denture (76) dirigée vers le bas sur les moyens de guidage de rail supérieurs, et dans lequel un nombre impair de plusieurs pignons de transmission (78) est intercalé entre les deux pignons (66, 74).

2. Dispositif de guidage selon la revendication 1, **caractérisé en ce que** les deux pignons (66, 74) sont agencés en déport vertical l'un de l'autre.

3. Dispositif de guidage selon la revendication 1 ou 2, **caractérisé en ce que** les deux pignons (66, 74) sont entraînés et s'engrènent indirectement l'un avec l'autre, dans lequel de préférence les deux pignons (66, 74) sont entraînés par des crémaillères (64, 72).

4. Dispositif de guidage selon la revendication 3, **caractérisé en ce que** des pignons de transmission (78) s'engrenant entre eux et se trouvant les uns à côté des autres sont agencés à l'opposé.

5. Dispositif de guidage selon la revendication 4, **caractérisé en ce que** les plusieurs pignons de transmission (78) sont mis hors prise des crémaillères (64, 72).

6. Dispositif de guidage selon l'une quelconque des revendications précédentes, **caractérisé en ce que** les deux pignons (66, 74) sont agencés dans le même sens.

7. Dispositif de guidage selon l'une quelconque des revendications précédentes, **caractérisé en ce que** les deux pignons (66, 74) sont réalisés de manière synchronisée.

8. Dispositif de guidage selon l'une quelconque des revendications précédentes, **caractérisé en ce que** les deux pignons (66, 74) sont reliés entre eux par un engrenage de réduction ou de multiplication.

9. Meuble avec une pièce de meuble (12) guidée par le biais d'un dispositif de guidage (10), mobile par rapport à un corps de meuble, **caractérisé en ce que** le dispositif de guidage (10) est réalisé selon l'une quelconque des revendications précédentes.
